Europäisches Patentamt

European Patent Office

Office européen des brevets

(11) Publication number: **0 265 085**
**A2**

## (12) EUROPEAN PATENT APPLICATION

(21) Application number: 87308433.9

(22) Date of filing: 23.09.87

(51) Int. Cl.⁴: **H04N 9/89**

(30) Priority: 25.09.86 JP 227345/86

(43) Date of publication of application:
27.04.88 Bulletin 88/17

(84) Designated Contracting States:
DE FR GB

(71) Applicant: **Pioneer Electronic Corporation**
**4-1 Meguro 1-chome**
**Meguro-ku Tokyo 153(JP)**

(72) Inventor: **Ishii, Hideo c/o Pioneer Electronic**
**Corporation**
**Tokorozawa Works No. 2610, Hanazono**
**4-chome**
**Tokorozawa-shi Saitama(JP)**

(74) Representative: **Brunner, Michael John et al**
**GILL JENNINGS & EVERY 53-64 Chancery**
**Lane**
**London WC2A 1HN(GB)**

(54) **Digitally-recorded disk playing device.**

(57) A device for playing digitally recorded disks such as compact disks (1) on which a PAL video signal has been recorded. A first error signal is produced (11) corresponding to a phase difference between a first reference signal and the horizontal synchronizing signal following time-axis correction. A second error signal (15) is produced corresponding to the phase difference between a second reference signal and a signal produced by delaying (16) the pilot burst signal from the time-axis corrected video signal for a predetermined time period. Both the first and second error signals thus generated are employed for time-axis correction (13) of the reproduced video signal.

FIG. 1

## DIGITALLY-RECORDED DISK PLAYING DEVICE

The present invention relates to a digitally recorded disk playing device. More particularly, the invention relates to a device for reading video signals recorded according to the PAL system from a digitally recorded disk.

There has previously been proposed in the art a system of recording an FM-modulated video signal together with a PCM (pulse code modulated) signal in an annular region (hereinafter referred to as "a video area" when applicable) of a small digital audio disk about 12 cm in diameter, namely, a "CD" or a compact disk, a predetermined distance from the center of the disk. A disk or which data have been recorded according the above-described system is called a "compound disk". A color video signal generated according to the PAL system can be recorded in the video area of such a compound disk.

In the case of a PAL signal, the color burst signal is inserted in the color video signal with a phase change of 90° every H (horizontal) line. As a result, it is difficult to perform time-axis correction by comparing the color burst signal with a reference signal.

For the purpose of overcoming this difficulty, a method has been employed in which, during the data recording operation, a so-called "pilot burst signal" having a frequency (3.75 MHz) an integer times the horizontal synchronizing signal is inserted into the synchronizing signal, and, during reproducing, the pilot burst signal is extracted and compared in phase with a reference synchronizing signal. Time-axis correction can readily be performed using this method.

There are known a variety of devices for reproducing a video disk on which, similar to the case of a compound disk, a PAL color video signal has been recorded. However, in most of these devices, a color burst signal is utilized for time-axis correction in order that the data detecting point of the pickup can be instantaneously moved from track to track, that is, so that a so-called "jumping operation" can be carried out for special reproduction modes such as the still picture reproduction mode.

However, a disk reproducing device using the color burst signal for the correction of time-axis error as described above is disadvantageous in that, since the frequency (4.43361875 MHz) of the color burst signal in a PAL video signal is not an integer times the frequency (15.625 KHz) of the horizontal synchronizing signal, it is additionally required to provide a reference signal generating device, such as a crystal oscillator, to produce a reference signal for phase-comparison with the color burst signal. Accordingly, the overall device is made more complex.

The disk playing device for reproducing data from a compound disk carrying a PAL color video signal may be simplified by using the pilot burst signal for correction of time-axis error. However, such an approach gives rise to another problem in that it is difficult to use the circuit in common with a reproducing device which uses the color burst signal for correction of time-axis error.

Accordingly, an object of the present invention is to provide a digitally recorded disk playing device having a simple construction and in which the reproduction circuit can be readily used in common with a reproducing device designed to perform time-axis correction according to a system different from that of the former device.

In the device of the disk playing device of the invention, a first error signal is produced corresponding to the phase difference between a first reference signal and a horizontal synchronizing signal read out from the video area of the disk, while simultaneously a second error signal is produced corresponding to the phase difference between a second reference signal and the signal obtained by delaying for a predetermined period of time a pilot burst signal read out from the video area. Both the first and second error signals are utilized for correction of time-axis error.

In the drawings:-

Fig. 1 is a block diagram showing a first example of a disk playing device according to the invention;

Fig. 2 is a flowchart used for a description of the operation of the device shown in Fig. 1;

Fig. 3 is a waveform diagram used for a description of the operations of circuit element in the device of Fig. 1; and

Fig. 4 is a block diagram showing a second example of the disk playing device according to the invention.

Preferred embodiments of the invention will now be described with reference to the accompanying drawings.

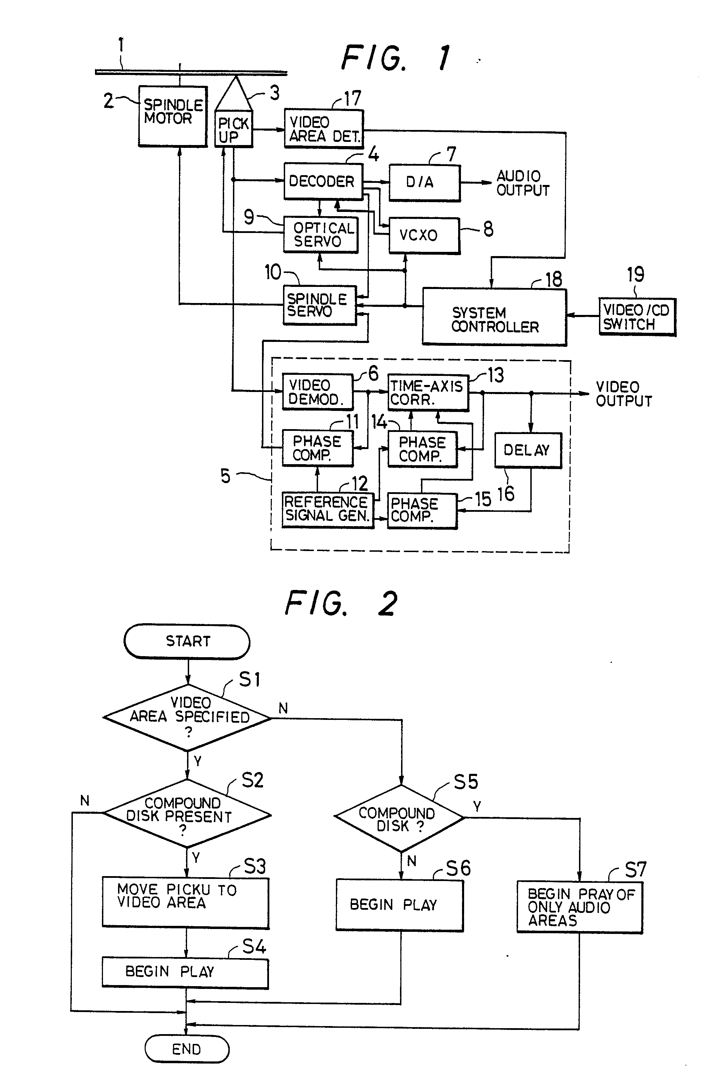

In Fig. 1, data recorded on a digitally recorded disk 1, which is rotated by a spindle motor 2, are read with an optical pickup 3. The optical pickup 3 includes a laser diode, an objective lens, a focusing actuator, a tracking actuator, and a photodetector. The output of the pickup 3 is supplied to a decoder 4 and to a video demodulator 6 in a video reproducing circuit 5.

The functions of the decoder 4 are: (1) provision of a focus error signal using the so-called astigmatism method; (2) formation a tracking error signal according to the three-beam method; (3) reproduction of a data demodulating clock pulse signal; (4) generation of a spindle error signal in accordance with the phase difference between the reproduced clock pulse signal and a clock pulse signal outputted by a clock pulse generator 8; and (5) data demodulation with an EFM (eight-to-fourteen modulation) demodulator.

The digital output of the decoder 4 thus produced is converted into an analog audio signal by a D/A (digital-to-analog) converter 7. The reproduced clock pulse signal outputted by the decoder 4 is supplied to the clock pulse generator 8. The clock pulse generator 8 responds to a servo switching instruction to selectively output a clock pulse signal having a predetermined frequency or a clock pulse signal having the same frequency as the reproduced clock pulse signal provided by the decoder 4. The focus error signal and the tracking error signal are supplied from the decoder 4 to an optical servo circuit 9.

The optical servo circuit 9 includes a focus servo amplifier for driving the focus actuator in the pickup, a tracking amplifier for driving the tracking actuator in the pickup in response to the tracking error signal, and a carriage motor adapted to move the pickup 3 radially of the disk 1 according to the tracking error signal. The gains of the focus servo amplifier, the tracking servo amplifier, and the carriage servo amplifiers are set according to a servo switching instruction. The spindle error signal outputted by the decoder 4 is supplied to a spindle servo circuit 10. The output of a phase comparator circuit 11 is also applied to the spindle servo circuit 10. The spindle servo circuit 10 drives the spindle motor 2 in response to one of the error signals outputted by the decoder 4 and the phase comparator circuit 11 in the video signal reproducing circuit 5 in response to the servo switching instruction. The optical servo circuit 9 and the spindle servo circuit 10 control the data detecting point on the surface of the disk 1 by controlling the relative position of the data detecting point in the radial direction of the disk 1 and the speed of movement of the data detecting point relative to the disk 1. The phase comparator circuit 11 produces an error signal in response to the phase difference between the horizontal synchronizing signal contained in the video signal outputted by the video demodulator 6 and a reference signal of 15.625 KHz outputted by a reference signal generator 12. The reference signal generator 12 may, for instance, be implemented with a crystal oscillator generating a reference signal of 3.75 MHz and a frequency divider for frequency-dividing the output of the crystal oscillator to produce the 15.625 KHz reference signal.

The output video signal from the video demodulator 6 is applied to a time-axis correcting circuit 13, to which the outputs of phase comparator circuits 14 and 15 are also applied. The phase comparator circuit 14 outputs an error signal corresponding to the phase difference between the horizontal synchronizing signal in the video signal outputted by the time-axis correcting circuit 13 and the 15.625 KHz reference signal outputted by the reference signal generator 12. Further, the phase comparator circuit 15 outputs an error signal corresponding to the phase difference between the pilot burst signal contained in the output of the time-axis correcting circuit 13 delayed by 4.3 $\mu$s , for instance, by a delay circuit 16 and the 3.75 MHz reference signal outputted by the reference signal generator 12. The time-axis correcting circuit 13 receives the error signals from the phase comparator circuits 14 and 15 and varies the signal delay time of a variable delay element such as a CCD (charge-coupled device) to thereby perform time-axis correction. The video signal after being subjected to time-axis correction by the time-axis correcting circuit 13 is supplied to a video output terminal.

The disk playing device further includes a video area detecting circuit 17 for detecting when the data detecting point of the pickup 3 is in a video area. The circuit 17 is implemented with a reflection (or transmission) type photo-coupler disposed so that when the pickup 3 reaches a predetermined position, light from a light-emitting element is reflected (or transmitted) to a light detecting element. The video area detecting circuit 17 outputs a video area detection signal to a system controller 18, the latter being implemented with at least one microcomputer. The system controller 18 determines from control signals included in the output data of the decoder 4 whether the reproduced data represents a piece of music or a blank segment between pieces of music, and reads a music number or a performance time for each piece of music. In response to key inputs received from an operating section (not shown) and also including a video/CD selector switch 19, the system controller 18 supplies instructions to the optical servo circuit 9, the spindle servo circuit 10, and the clock pulse generator 8.

In the disk reproducing device thus constructed, the processor of the microcomputer forming the system controller 18 operates according to a program formed on the basis of the flowchart shown in Fig. 2. This operation will be described in more detail.

When an instruction for a playing operation is issued by the corresponding key, the processor determines whether or not reproduction of the video area has been specified by the video/CD selector switch 19 (Step S1). When it is detected that reproduction of the video area has been specified by the switch 19, the processor determines whether or not the disk 1 is a compound disk from the TOC recorded in the lead-in area (Step S2). If is determined that the recording disk 1 is not a compound disk in Step S2, the processor starts execution of the main routine again. If it is determined that the disk 1 is a compound disk in Step S2, the processor shifts the data detecting point of the pickup 3 to the video area (Step S3). Thereafter, the processor starts the playing operation (Step S4) and starts the execution of the main routine again.

If the video area detection signal is sensed during Step S3 or S4, the processor requests an interrupt to supply a servo change-over instruction to the optical servo circuit 9, the spindle servo circuit 10, and the clock pulse generator 8.

If it is determined in Step S1 that reproduction of the video area has not been specified, the processor determines using the TOC recorded in the lead-in area whether or not the disk 1 is a compound disk (Step S5). If it is determined in step S5 that the recording disk 1 is not a compound disk, then the processor starts the playing operation (Step S6) and starts execution of the main routine again. If, on the other hand, it is determined in Step S5 that the disk 1 is a compound disk, then the processor starts the playing of only the audio area (Step S7), and thereafter starts execution of the main routine again.

When the processor operates as described above to read data recorded in the video area, a video area detection signal is produced, which is used as a servo change-over instruction. In response to the servo change-over instruction, the error signal in the spindle servo circuit 10 is switched, the horizontal synchronizing signal in the video signal and the reference signal are subjected to phase comparison, and the speed of rotation of the spindle motor 2 controlled in accordance with the comparison results. At the same time, the gains of the focus, tracking and carriage servo amplifiers are increased, and therefore even if the error signal increases in frequency, the data detecting point can be satisfactorily controlled, for instance, in position.

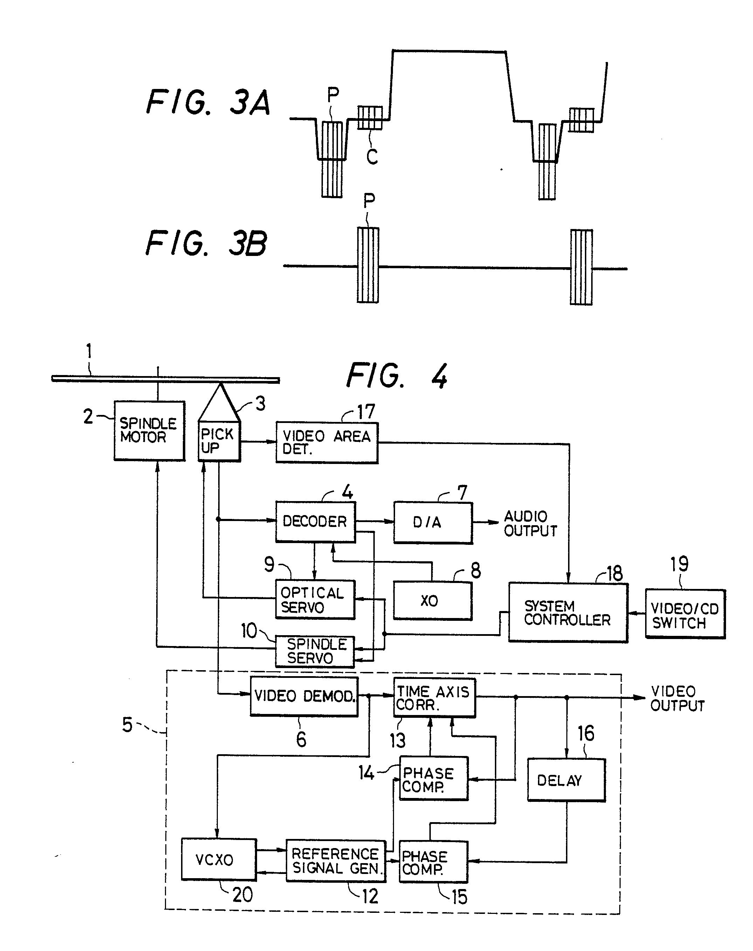

In the above-described device, the delay circuit 16 may be a narrow-band bandpass filter having a center frequency equal to the frequency of the pilot burst signal. If in this case the circuit constants are selected so that the signal delay time of the pass band filter is about 4.3 μs, then when the time-axis correcting circuit 13 outputs a PAL color video signal, as shown in Fig. 3A, the delay circuit 16 will produce a pilot burst signal P, as shown in Fig. 3B, substantially at the same timing as the color burst signal C in the output of the time-axis correcting circuit 13. The pilot burst signal P thus produced is applied to the phase comparator circuit 15, which in response produces the time-axis error signal.

The phase comparator circuit 15 may be replaced by a circuit which extracts the color burst signal and phase compares it with the reference signal to thereby generate the time-axis error signal. In this case, the circuit can be used in common with a disk playing device designed to perform time-axis correction with a color burst signal.

Fig. 4 is a block diagram showing another embodiment of the invention. In the embodiment of Fig. 4, the recording disk 1, a spindle motor 2, pickup 3, decoder 4, video demodulator 6, D/A converter 7, clock pulse generator 8, optical servo circuit 9, spindle servo circuit 10, reference signal generator 12, time-axis correcting circuit 13, phase comparator circuits 14 and 15, delay circuit 16, video area detecting circuit 17, system controller 18, and video/CD selector switch 19 are constructed and connected in the same manner as in the first embodiment of Fig. 1. However, in the second embodiment of Fig. 2, the clock pulse generator 8 is designed to produce a clock pulse signal having a predetermined frequency at all times, and the output of the video demodulator 6 is supplied to the time-axis correcting circuit 13 and a clock pulse generating circuit 20. The circuit 20 produces a clock pulse signal having a frequency corresponding to the phase difference between the horizontal synchronizing signal contained in the video signal outputted by the demodulator 6 and the reference signal of about 15.625 KHz produced by the reference signal generator 12. The output of the clock pulse generating circuit 20 is applied to the reference signal generator 12. In the reference signal generator 12, the output of the clock pulse generating circuit 20 is subjected to frequency-division to provide the 15,625 KHz reference signal supplied to the clock pulse generating circuit 20 and the phase comparator circuit 14, and a reference signal of about 3.75 MHz supplied to the phase comparator circuit 15.

The error signal outputted by the decoder 4 and the servo change-over instruction outputted by the system controller 18 are exclusively applied to the spindle servo circuit 10. The spindle servo circuit 10 increases the various gains in response to the servo change-over instruction from the system controller 18.

In the second embodiment described above, similar to the first embodiment of Fig. 1, time-axis correction is carried out through phase comparison between the pilot burst signal delayed by the delay circuit 16 and the reference signal. As a result, this circuit too can be used in common with a device designed to perform time-axis correction using the color burst signal.

As is apparent from the above description, in the disk playing device of the invention, the first error signal is formed according to the phase difference between the first reference signal and the horizontal synchronizing signal in the video data read out from the video area, and the second error signal is formed corresponding to the phase difference between the second reference signal and the signal provided by delaying for a predetermined period of time the pilot burst signal from the video data read from the video area of the disk, and the first and second error signals thus formed are utilized to correct time-axis error. That is, a single reference signal forming circuit provides both the first and second reference signals. This contributes significantly to simplifying the overall construction of the disk playing device. Furthermore, because, in accordance with the invention, the pilot burst signal, after being delayed for the predetermined period of time so as to appear at the same timing as the color burst signal, is compared in phase with the reference signal, the circuit can be readily used in common with a disk playing device designed to perform time-axis correction with a color burst signal.

## Claims

1. A digitally recorded disk playing device, for reproducing data from a digitally recorded disk (1) on which signals obtained by subjecting video data to frequency modulation and other digital signals have been recorded in a superposition mode, the video data being a PAL color video signal which includes a pilot burst signal having a frequency an integer times a horizontal synchronizing signal frequency of the video signal, characterized by
first error signal forming means (11) for forming a first error signal corresponding to a phase difference between a first reference signal and a horizontal synchronizing signal in the video data read from the disk;
delay means (16) for delaying for a predetermined period of time a pilot burst signal in the video data read from the disk; and
second error signal forming means (15) for forming a second error signal corresponding to a phase difference between a second reference signal and the pilot burst signal delayed by the delay means,

the first and second error signals being used for elimination of time-axis error in the reproduced video signal.

2. A device according to claim 1, wherein the first and second reference signals are of fixed frequency and phase.

3. A device according to claim 1, wherein the first and second reference signals have frequencies determined in accordance with the phase difference between the horizontal synchronizing signal prior to time-axis error correction and the first reference signal.

## FIG. 1

## FIG. 2

## FIG. 3A

P
C
P

## FIG. 3B

P

## FIG. 4

```
┌───────────┐ 1
│           │
│  SPINDLE  │ ◁ 3          ┌──────────────┐ 17
2─│  MOTOR   │  PICK        │ VIDEO AREA   │
│           │  UP          │ DET.         │
└───────────┘              └──────────────┘

      ┌──────────┐ 4      ┌──────────┐ 7
      │ DECODER  │────────│   D/A    │──── AUDIO OUTPUT
      └──────────┘        └──────────┘

 9    ┌──────────┐        ┌──────────┐ 8       ┌──────────────┐ 18   ┌──────────────┐ 19
      │ OPTICAL  │        │   XO     │         │   SYSTEM     │      │  VIDEO/CD    │
      │ SERVO    │        └──────────┘         │ CONTROLLER   │──────│  SWITCH      │
      └──────────┘                             └──────────────┘      └──────────────┘

 10   ┌──────────┐
      │ SPINDLE  │
      │ SERVO    │
      └──────────┘

      ┌──────────────┐      ┌──────────────┐
      │ VIDEO DEMOD. │──────│ TIME AXIS    │──── VIDEO OUTPUT
      └──────────────┘      │ CORR.        │
 5          6              └──────────────┘ 13

                      14  ┌──────────┐         16  ┌──────────┐
                          │ PHASE    │             │ DELAY    │
                          │ COMP.    │             └──────────┘
                          └──────────┘

  ┌──────────┐      ┌──────────────┐      ┌──────────┐
  │  VCXO    │──────│ REFERENCE    │──────│ PHASE    │
  └──────────┘      │ SIGNAL GEN.  │      │ COMP.    │
      20            └──────────────┘      └──────────┘
                         12                   15
```